# EUROPEAN PATENT SPECIFICATION

(11) **EP 3 960 253 B1**
(45) Date of publication and mention of the grant of the patent: **29.05.2024**
(21) Application number: 20795358.9
(22) Date of filing: 17.03.2020
(51) Int. Cl.: A63B 9/00, A63B 71/02

(54) **DEVICE FOR SWITCHING OPERATING MODES OF A DYNAMIC PYLON**
VORRICHTUNG ZUM UMSCHALTEN DER BETRIEBSMODI EINES DYNAMISCHEN PYLONS
DISPOSITIF DE COMMUTATION DE MODES DE FONCTIONNEMENT DE POTEAU DYNAMIQUE

(30) Priority: 22.04.2019 RU 2019112265
(43) Date of publication of application: 02.03.2022
(73) Proprietor: Koriushenkov, Nikolai Aleksandrovich, St. Petersburg, 197136 (RU)
(72) Inventor: Koriushenkov, Nikolai Aleksandrovich, St. Petersburg, 197136 (RU)
(74) Representative: Wroblewski, Marcin Jan
(86) International application number: PCT/RU2020/000142
(87) International publication number: WO 2020/218942

(56) References cited:
- RU-U1- 104 472
- RU-U1- 161 991
- RU-U1- 175 664
- RU-U1- 175 664
- RU-U1- 185 907
- US-B1- 9 999 795
- US-B2- 8 137 243

## Description

### Field of the Invention

The invention relates to gymnastic equipment and more specifically to pylons intended for performance of gymnastic exercises and dances by artists.

There are static and dynamic pylons. A dynamic pylon comprises the following members: a pole and one or two supports. The pole and the supports are interconnected with a possibility of the pole rotation typically using one or more bearings. The pole is a moving memberof the dynamic pylon, which provides a pillar of support for a performer of gymnastic exercises on the pole and can comprise different combinations of multiple parts, such as pipe, shaft, bushing, screw, nut and others. Each support is a static member of a dynamic pylon, which is intended for installation and retaining the pole at the operational location and can comprise different combinations of various parts such as disc, bushing, axle, and other parts. Dynamic pylons can function both in static mode when the pylon pole cannot rotate and dynamic mode when the pole is able to rotate. The dynamic pylon comprises the parts, which together compose the device for switching the operating mode of a pylon. Operational convenience of the dynamic pylon depends upon many factors including the mode switching convenience of its work, which in turn is determined by the design features of the device for switching the operating mode of a dynamic pylon.

### Background of the Invention

It is known the Dynamic pylon mode switching device (Patent CN107875609 published in 04.06.2018) for a pylon, comprising a combination of parts included into different members of the device: fixed, rotating and connecting ones. Fixed members include a disc and a silicone gasket. The rotating part includes a fixed bushing with cogs, springs, a moving bushing with cogs, cams, dowel-pins, cylindrical rods, rotating bushings, silicone ring, and cylindrical pins. The connecting members include a coupling pipe, a thrust bearing, bushing, gasket and radial bearings.

The disadvantages of the device under the patent CN107875609 include the manufacturing that requires to perform large amount of machine works and to use highly qualified labor to assemble. In order to switch the pylon from one mode to another it is required to bow down or sit down and pull up the outer bushing and then turn it at a certain angle and release it letting it go down by itself.

It is known a pylon (Patent FR3041884 published on 04.07.2017) composing a combination of parts forming a device for switching its operating modes and comprising:
- The latch with a cap fastened to it by a mechanical method;
- The hollow cylinder, which is a part of the pole of the pylon and features at least one main recess for constant accommodation of the latch forming a guide for the latch movement. The main recess for the latch is provided in the wall of the hollow cylinder as at least one L-shape slot opens towards internal space of the hollow cylinder and towards an outer space, which surrounds it;
- The lower support with a lug fit with recess for periodic temporary accommodation of the latch middle part. The lug is located inside the hollow cylinder.

The disadvantage of technical solution as per the Patent FR3041884 is a complex process of switching the operating modes of a dynamic pylon. In order to switch the pylon from dynamic operating mode into static one it is required to raise the cap up to move the latch up along the short vertical part of the slot all the way then turn it to move the latch in the horizontal part of the slot all the way, and then lower the cap down to move the latch down along the long vertical part of the slot. If the latch fails from the first attempt to get in the counter- recess in the lug of the lower support, the performer is to turn the pole further for the latch to be above the counter- recess. Then the latch is lowered down into the counter- recess by gravity and the weight of the cap and/or as a result of control action on the cap. The pylon is in the static operating mode. In order to return the pylon into the dynamic operating mode it is required to perform the same actions with the cap and the latch but in reversed order.

It is known a pylon (Patent CZ30933U1 published on 08.21.2017) - a prototype composing a combination of parts forming a device for switching its operating modes and comprising:
- The latch formed by two rods. The latch is featured with a handle performed as a bushing installed on the pole shaft with a possibility to move along it in vertical directions. Bushing-handle is installed in the upper parts of the rods;
- The first ring installed on the pole shaft features the main recesses for the latch rods wherein the rods are constantly partially accommodated with a possibility of their straight-line motion therein. These main recesses are formed as vertical parallel through holes opened only upward and downward;
- Caps of the lower support with counter-recesses for the rods for periodic temporary accommodation of lower parts of the rods. These recesses are formed as vertical parallel holes. The cap is installed on the support;
- The magnetic lock comprising three members:
   The first member - a magnetic unit comprising two permanent magnets of cylindrical shape made of magnetically hard material. Permanent magnets are installed with an interference fit in the upper part of the holes for permanent magnets and for rods performed on the bushing-handle;
   The second member - bushing-handle installed on the vertical crossbeam shaft with a possibility to move along it in vertical directions;
   The third member - the second ring on the vertical crossbeam shaft performed of still - magnetically soft material - and installed on the vertical crossbeam shaft above the bushing-handle. This ring is intended for periodic temporary engagement with the permanent magnets.

Device chosen for the prototype as per Patent CZ30933U1 operates as follows:
When the pylon is in the static operating mode, a portion of each rod is located in the holes of the first ring and, simultaneously, another portion of the same rod is located in the holes of the cap of the lower support. Therefore, the rods provide a mechanical obstacle to the rotation of the pole.

In order to switch the pylon into dynamic operating mode it is required to bow down or sit down and having acted with two hands upon the radial lug of the bushing-handle with rods and permanent magnets replace this bushing-handle towards up along the pole shaft and clamp it down to the second ring intended for the engagement with the permanent magnets. The permanent magnets installed in the cavities on the bushing-handle keep the latter clamped down to the second ring by the force of magnetic attraction. Therefore, a portion of each rod is located beyond the holes in the cap of the support. The pylon is in the dynamic operating mode.

To return the pylon into the static operating mode it is required to bow down and push with two hands on the radial lug of the bushing-handle with rods and shift it down along the pole shaft. If the rods fails to get into the holes for rods in the cap on the support, then they bump up against the end surface of the cap somewhere between the holes for rods. Further the pole is rotated until the tapered parts of the rods are above the holes of the cap. With the further movement the rods are deepened into the holes of the cap until bushing-handle bump up against the first ring. Therefore, a portion of each rod is located in the holes of the first ring and, simultaneously, another portion of the same rod is located in the holes of the cap of the lower support. Therefore, the rods provide a mechanical obstacle to the rotation of the pole. The pylon is in the static operating mode.

Based on the above the device for switching the operating mode of a dynamic pylon - the prototype comprising a latch is provided for creating a mechanical obstacle to the rotation of the pole of the pylon. The only magnetic lock of this device for switching the operating mode of a pylon is provided for creating an obstacle to the latch movement within the main recess for the latch from a single required position by the force of a permanent magnet. The members of the magnetic lock of the device for switching operating modes of the pylon represent the prototype used only to create an obstacle to the movement of the latch in the main recess.

The disadvantage of the prototype is the complexity for switching the operating mode of a pylon due to the fact that to switch the pylon from one operating mode to another a performer of exercises is to sit down or bow down and acting with both hands on the handle of the device to move it from one position to another. This sequence of movements takes place within a certain period of time. The process of switching the mode is complicated by the fact that a person cannot hold onto the pole of the pylon with hands, since both hands are busy providing control actions on the bushing-handle. In public appearances to switch the operating mode of a pylon without being noticed by spectators is impossible. Switching the operating modes of a dynamic pylon is performed only with two hands in manual mode.

Document RU175664U describes a lower supporting structure of dynamic pylon, having lower portion in which diameter of bushing is smaller than diameter of radial protrusion of upper portion, and the lower portion having a bushing with a groove for mounting a locking element.

### Summary of the Invention

The object of the claimed invention is to create a new device as claimed in claim 1 for switching the operating mode of a dynamic pylon, which makes it possible to facilitate and speed up the process of switching the operating mode of a dynamic pylon.

Technical result of the invention is a device for switching the operating modes of a dynamic pylon making it possible to switch the modes both in a normal manual mode, when a performer of exercises on the pylon moves the latch in the main recess by control action thereon, and in the semi-automatic mode when a performer of exercises on the pylon switches the latch by control action thereon into position when the latch starts moving independently in the basic recess for the latch. This latch movement happens without participation of a performer at a speed exceeding the physiological athletic ability of a performer, as a result of the action of magnetic forces of permanent magnets composing the magnetic units of different magnetic locks. This means that the same combination of parts with a permanent magnet in the proposed device for switching the operating modes of the pylon is used not only as a device to create an obstacle to the movement of the latch from the required position by the force of a permanent magnet (magnetic lock) but also as a device for transforming magnetic energy of a permanent magnet into mechanical work to move the latch to the required position (an actuator).

The device proposed for switching the operating modes of a pylon facilitates and reduces the cost of pylons manufacturing as it has a simple design that ensures ease of assembly of the pylon and consists of a small number of simple to manufacture parts of small dimensions.

In addition, the disclosed technical solution makes it possible to locate the device for switching the operating modes of a dynamic pylon at the lower support of the pylon or at the upper support of the pylon. Alternatively, one device for switching the operating modes of a dynamic pylon can be located at the lower support of the pylon, and another device for switching the operating modes of a dynamic pylon can be located at the upper support. This in turn makes it possible to manufacture double-sided poles of pylons and double-sided pylons the design thereof allows to choose the location of the screw of the screw assembly of the pylon.

The technical result is achieved by the fact that the dynamic pylon includes a device for switching the operating modes of a dynamic pylon comprising a latch that creates a mechanical obstacle to the rotation of a pole of the dynamic pylon; at least one part of a member of the dynamic pylon, said part comprising a main recess for the latch wherein the latch is permanently and at least partially located and can travel linearly inside this main recess, at least one part of another member of the dynamic pylon, said part comprising a counter-recess wherein the latch partially has temporary accommodation for creating a mechanical obstacle to the rotation of the pole; a magnetic lock that creates an obstruction to the travel of the latch within the main recess away from the required position, said obstruction is created by means of magnetic force created by a magnetic unit, said lock comprising, first, the magnetic unit comprising at least one permanent magnet; second, at least one part that the magnetic unit is installed thereon; third, at least one part that is periodically temporarily engaged with the magnetic unit, wherein the main recess communicates at the side of its lateral wall with an outer space, which surrounds the dynamic pylon member part where the main recess is located.

Also, the technical result is achieved by the fact that the main recess communicates to the outer space by a slot built in a side wall of at least one part of the dynamic pylon member where said part separates the main recess from the outer space, which surrounds the dynamic pylon member part, wherein the main recess is located.

Also, the technical result is achieved by the fact that the slot provides an access to the latch.

Also, the technical result is achieved by the fact that the latch extends partially from the main recess through the slot beyond the overall dimensions of at least one dynamic pylon member part, where the main recess is provided.

Also, the technical result is achieved by the fact that the main recess is a groove located at the lateral wall of at least one part of a member of the pylon.

Also, the technical result is achieved by the fact that the latch partially extends beyond the overall dimensions of at least one pylon part where the groove is located.

Also, the technical result is achieved by the fact that the latch is the second member of the magnetic lock and at least one dynamic pylon member part where the main recess is located, said part is the third member of the magnetic lock.

Also, the technical result is achieved by the fact that the latch is the second member of the magnetic lock and at least one permanent magnet is installed on at least one dynamic pylon member part where the main recess is located, said part is the third member of the magnetic lock.

Also, the technical result is achieved by the fact that the latch is the third member of the magnetic lock, and at least one dynamic pylon member part wherein the counter-recess is located is the second member of the magnetic lock.

Also, the technical result is achieved by the fact that the permanent magnet is installed in a cavity made for the permanent magnet in the dynamic pylon member part with a sinking in relation to the wall surface of the pylon member part, where the cavity is made.

Also, the technical result is achieved by the fact that the permanent magnet is installed in the cavity in the dynamic pylon member part with the sinking in relation to the wall surface of the dynamic pylon member part, where said cavity is made so that the force of magnetic attraction between permanent magnet and the walls of the cavity where it is installed is more than force of magnet attraction between the permanent magnet and its mating part.

Also, the technical result is achieved by the fact that device for switching the operating mode of a dynamic pylon wherein the device comprises at least one additional magnetic lock that creates an obstacle for the travel of the latch in the main recess by the force of the magnetic unit of an additional magnetic lock, said magnetic unit comprising at least one permanent magnet.

Also the technical result is achieved by the fact that the magnetic unit of the magnetic lock provides the travel for the latch in the main recess into the required position from the position where a performer placed it, wherein the magnetic force of the magnetic unit of the magnetic lock acting upon the latch exceeds the sum of the magnetic forces of magnetic units of other magnetic locks acting upon the latch, a force of gravity of the latch and forces of friction between the latch and the wall of the main recess and the counter-recess.

### Brief Description of the Drawings

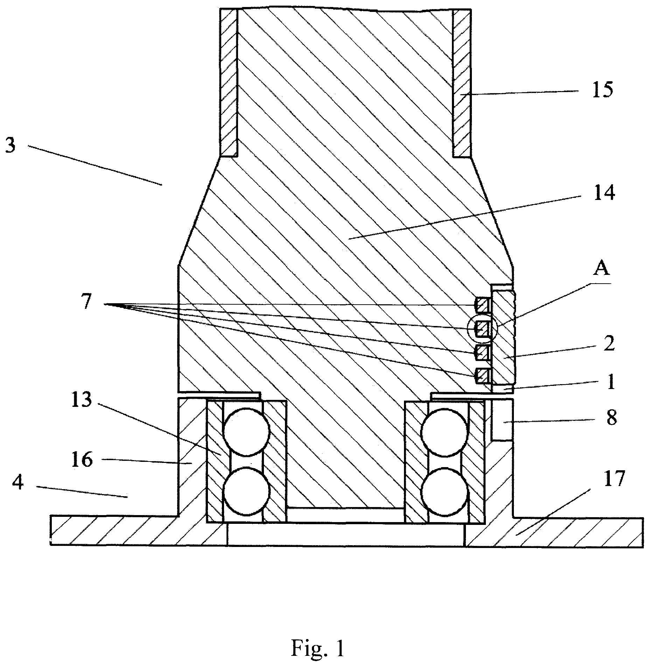

The essence of the invention is disclosed in Drawings Figs. 1 - 14, where the following designations are used:
1 - main recess;
2 - latch;
3 - pole;
4 - lower support;
5 - upper support;
6 - handle;
7 - permanent magnet;
8 - counter-recess;
9 - screw;
10 - slot;
11 - cavity;
12 - sinking;
13 - bearing;
14 - shaft;
15 - pipe;
16 - collar;
17 - disc;
18 - bushing;
19 - ring;
20 - axle;
21- gasket.

Fig. 1 shows an axial section of a portion of the dynamic pylon in the dynamic operating mode with the device for switching the operating modes with magnetic lock, when the main recess is made in the part of the pole of the pylon the counter-recess is performed in the part of the support of the pylon located at the lower bearing surface for the pylon.

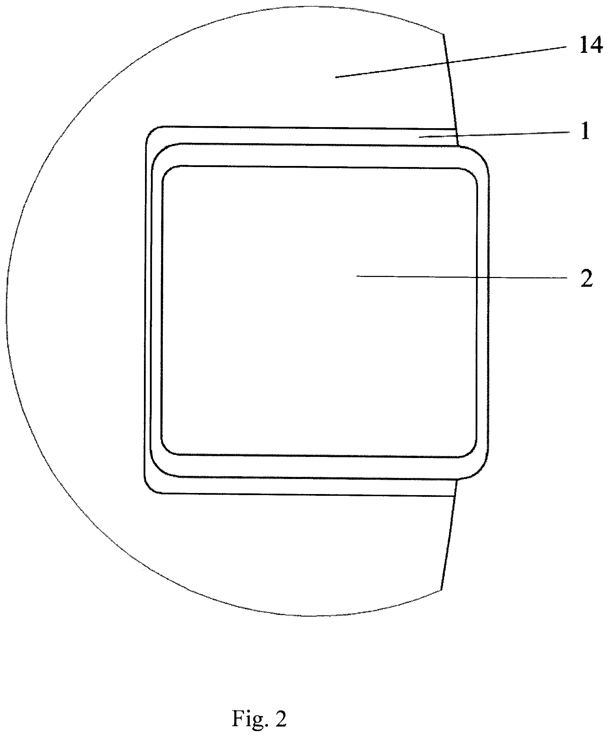

Fig. 2 shows the installation of the latch into the main recess performed on the pole shaft of the pylon.

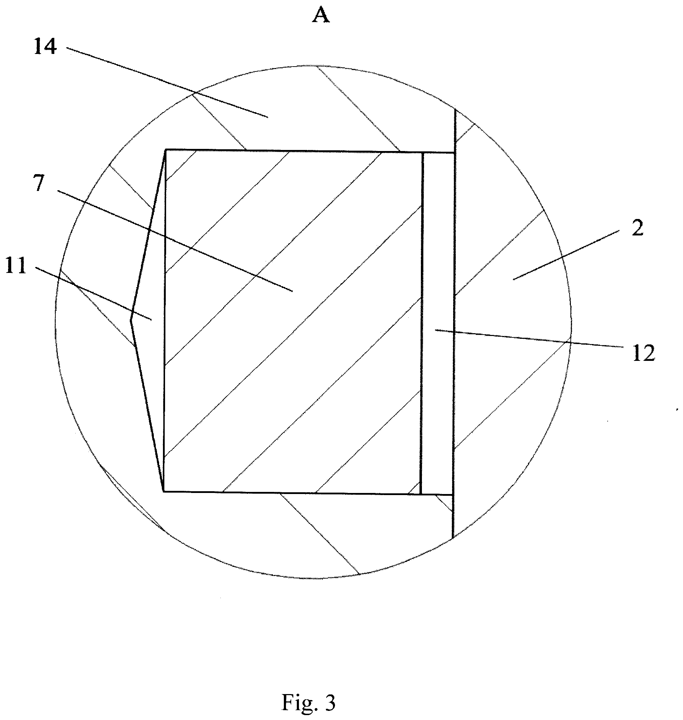

Fig. 3 shows the detail view A of the drawing presented in Fig. 1, wherein the permanent magnet installed in the cavity for the permanent magnet in the wall of the main recess in the part of the pylon member with sinking.

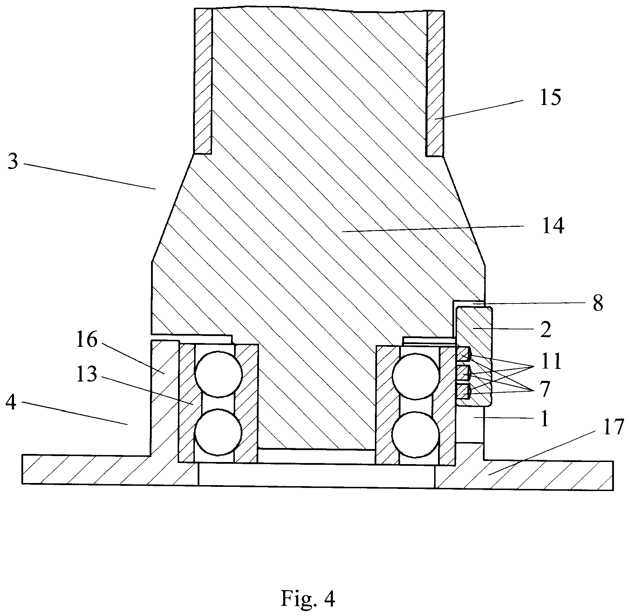

Fig. 4 shows an axial section of a portion of the dynamic pylon in the static operating mode with the device for switching the operating mode with magnetic lock, when the main recess is performed in the part of support of the pylon located at the lower bearing surface (for example, on the stage floor) for the pylon, wherein the counter-recess is formed in the part of the pole of the pylon.

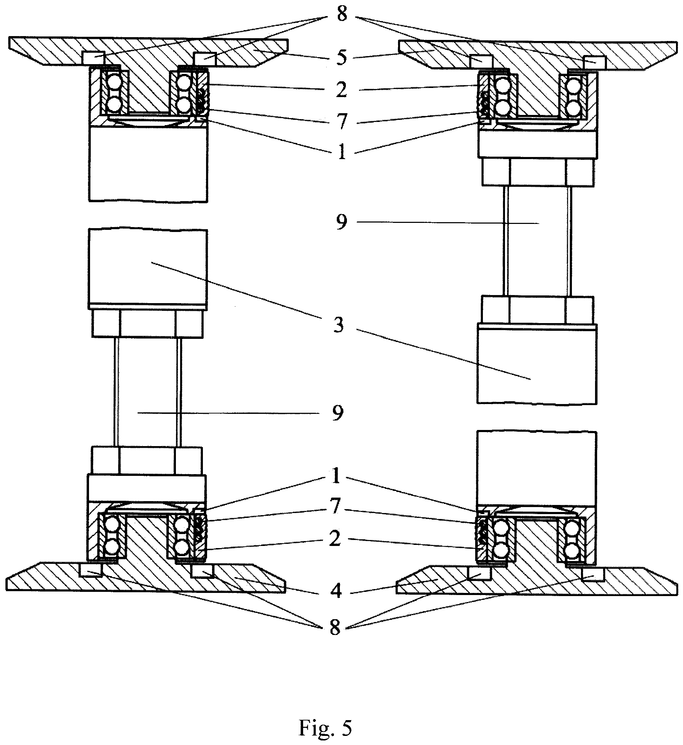

Fig. 5 shows two dynamic pylons with the devices for switching the operating modes located both at the lower bearing surface for the pylon and at the upper bearing surface (for example, on the stage floor) for the pylon.

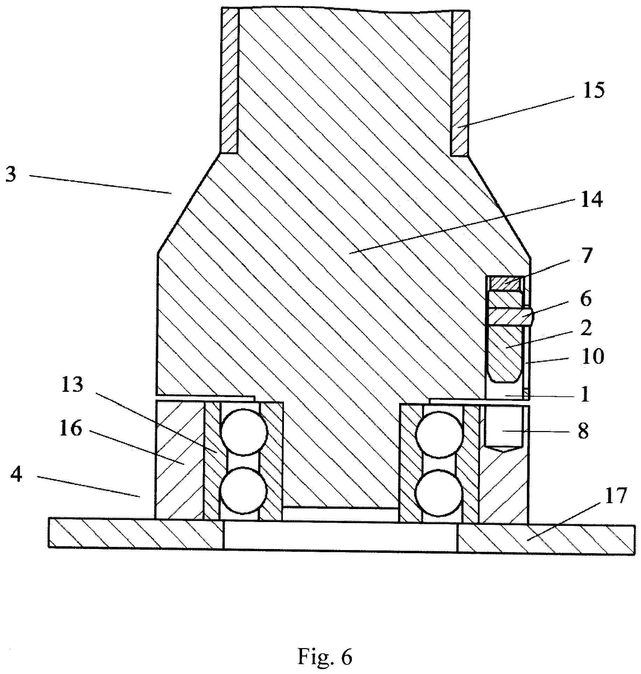

Fig. 6 shows an axial section of a portion of the dynamic pylon in the dynamic operating mode with the device for switching the operating modes with magnetic lock, when the main recess is made in the part of the pole of the pylon, the counter-recess is formed in the part of the support of the pylon located at the lower bearing surface for the pylon.

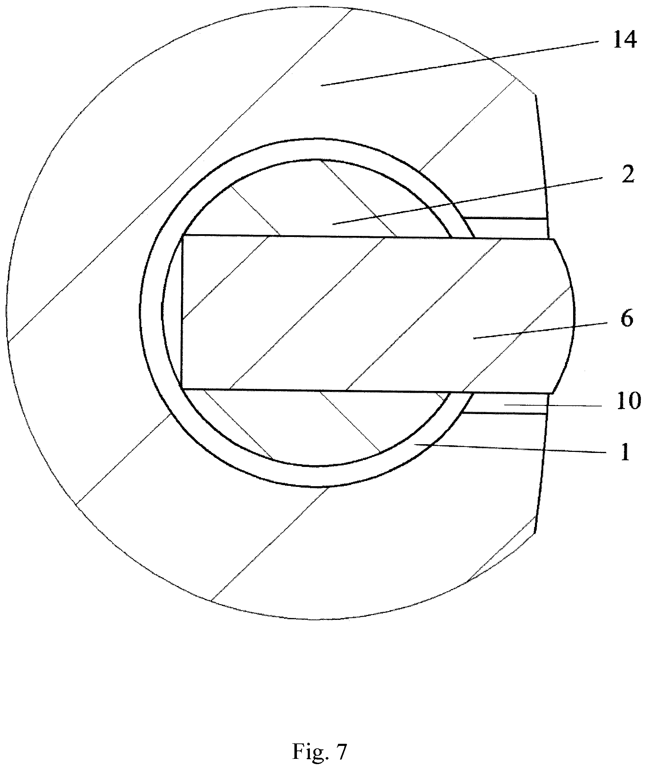

Fig. 7 shows the installation of the latch into the main recess provided on the pole shaft of the pylon.

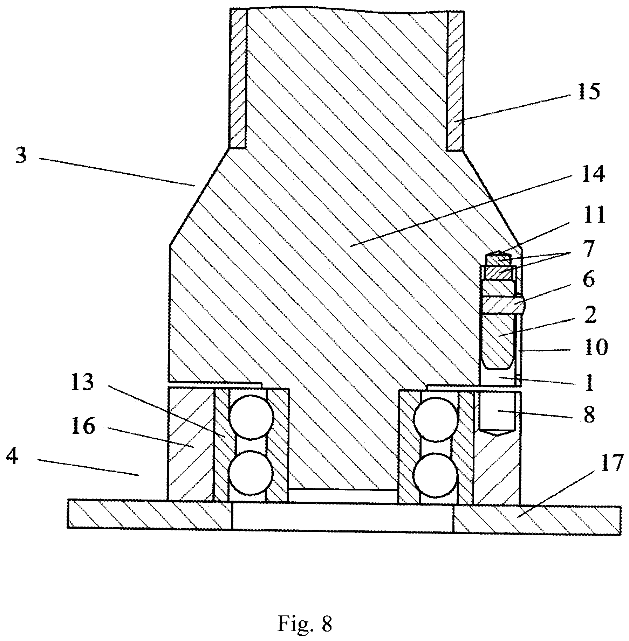

Fig. 8 repeats the view of the axial section of a portion of the dynamic pylon with the device for switching its operating modes shown in Fig. 6. Design and operational features of the device for switching the operating modes of a dynamic pylon shown in Fig. 6 are applicable for the device shown in Fig. 8, with exception of two features of construction.

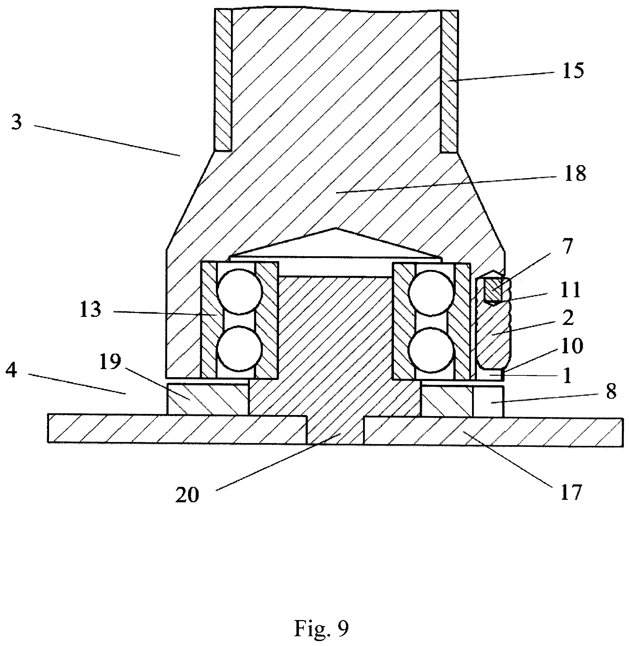

Fig. 9 shows an axial section of a portion of the dynamic pylon in the dynamic operating mode with the device for switching the operating modes with magnetic lock, when the main recess is provided in the part of the pole of the pylon, the counter-recess is provided in the part of the support of the pylon located at the lower bearing surface for the pylon.

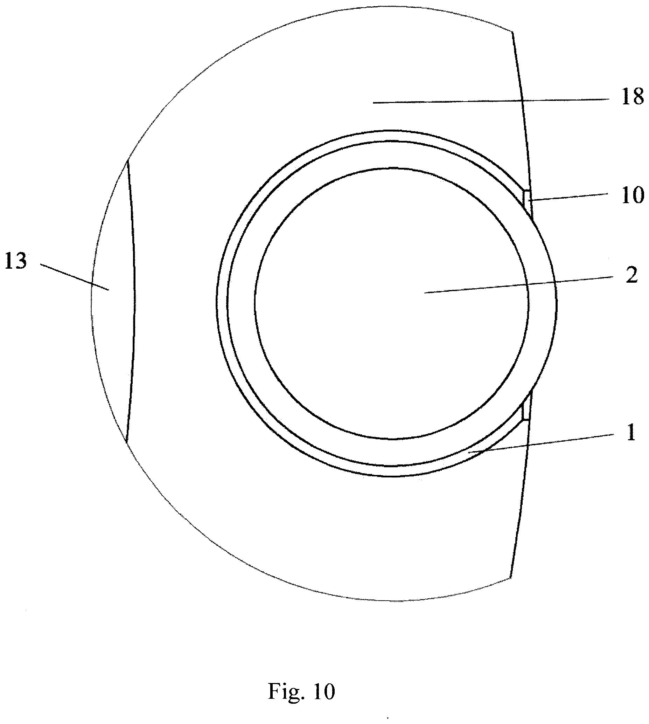

Fig. 10 shows the installation of the latch into the main recess provided on the pole bushing of the pylon.

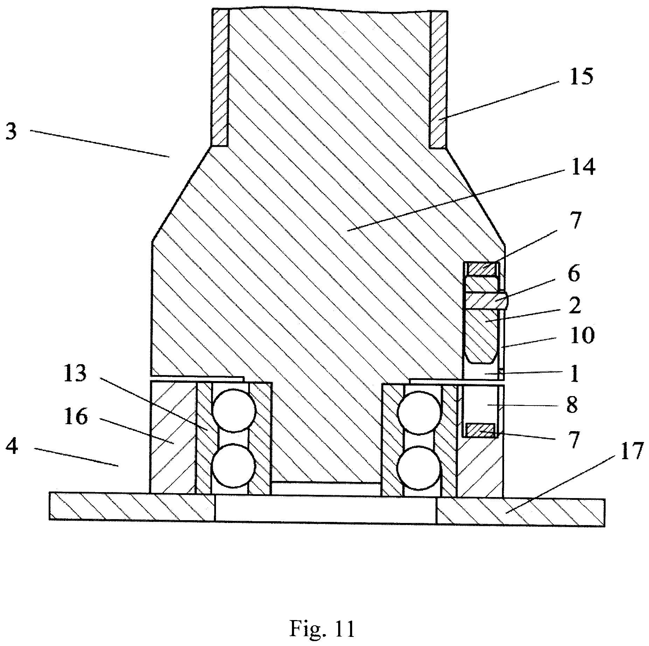

Fig. 11 repeats the view of the axial section of a portion of the dynamic pylon with the device for switching its operating modes shown in Fig. 6. Design and operational features of the device for switching the operating modes of a dynamic pylon shown in Fig. 6 are applicable for the device shown in Fig. 11, with exception of one constructional and one operational features.

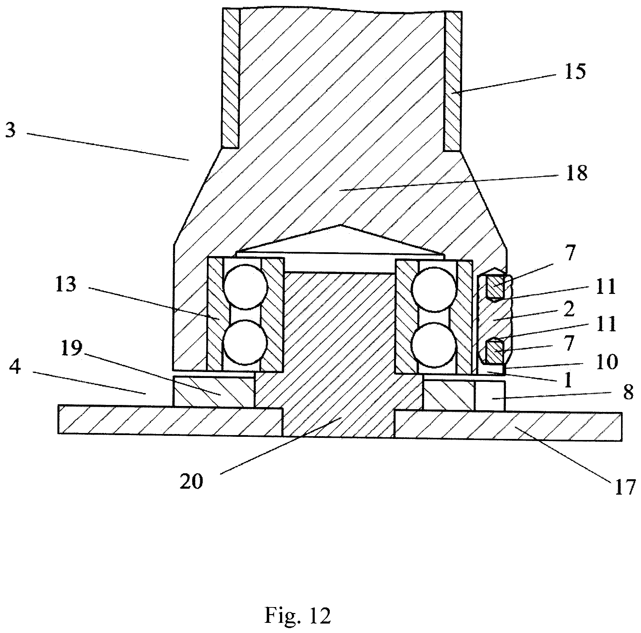

Fig. 12 repeats the view of the axial section of a portion of the dynamic pylon with the device for switching its operating modes shown in Fig. 9. Design and operational features of the device for switching the operating modes of a dynamic pylon shown in Fig. 9 are applicable for the device shown in Fig. 12, with exception of one constructional and two operational features.

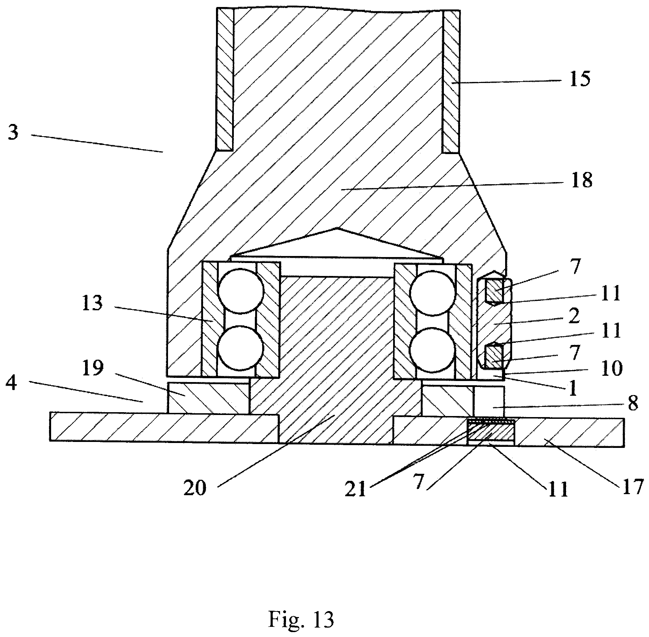

Fig. 13 repeats the view of the axial section of a portion of the dynamic pylon with the device for switching its operating modes shown in Fig. 12. Design and operational features of the device for switching the operating modes of a dynamic pylon shown in Fig. 12 are applicable for the device shown in Fig. 13, with exception of one constructional and one operational features.

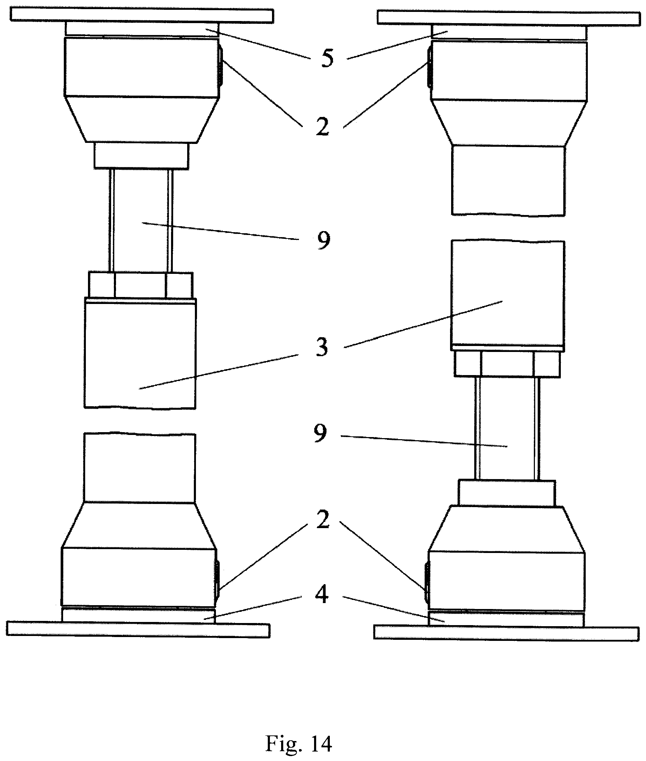

Fig. 14 shows two dynamic pylons with the devices for switching the operating modes located both at the lower bearing surface for the pylon and at the upper bearing surface for the pylon.

### General Description of the Invention

It should be noted that structural members and process connections, which do not affect the operability of the device for switching the operating mode of the dynamic pylon, are not shown in the drawings or shown conditionally.

In the case where a recess (either the main recess 1 or the counter-recess 8) is provided at least in one part of the lower support 4, then the mating recess (either counter-recess 8 or the main recess 1) is made at least in one part on the lower end of the pole 3. In the case where the recess (either the main recess 1 or the counter-recess 8) is formed at least in one part of the upper support 5, the mating recess (either counter-recess 8 or the main recess 1) is performed at least in one part on the upper end of the pole 3. In the case where the parts connecting the pole 3 with the lower support 4 and the upper support 5 are made identically and where a part from one of the recesses is located in any support, then the pole 3 can have two parts with the identical recesses located at the opposite ends of the pole 3. In this case, where installing a pylon with two supports at the operational location, it is possible to select a location of the screw 9 of the screw assembly of the pylon. Thus, the novel double-sided pole 3 of a dynamic pylon for gymnastic exercises is disclosed.

The device for switching the operating mode of a dynamic pylon can be included in the structure of the pylon with two supports, one at the lower bearing surface and the other at the upper bearing surface. A pylon can comprise two devices for switching its operating modes where one device is located at one support and the other device is located at the opposite support of the pylon. (Fig. 5 and 14). In this case, when installing a pylon at the operational location it is possible to make choice for the location of the screw 9 of the screw assembly of the pylon. Thus, the novel double-sided pole 3 of a dynamic pylon for gymnastic exercises is disclosed.

Geometric dimensions, locations and shapes of the recesses (the main recess 1 and the counter-recess 8) made in parts of supports (4 and 5) of the pylon and in the parts of the pole 3 of the pylon, also geometric dimensions and shape of the latch 2 are coordinated with each other and are selected so that the latch 2 arrangement in the main recess 1 allows straight line motion of the latch 2 there and a periodic temporary partial accommodation of a portion of the latch 2 in the counter-recess 8 for creating a mechanical obstacle to the rotation of the pole 3. The shape of the latch 2 cross-section can be multilateral, rectangular, round, T-shaped, dovetail or other. The latch 2 can be of a stepped configuration. Parts of latch 2 may be of different cross-section.

For example, the main recess 1 is made as a through hole or a blind hole connected with the outer space with the slot 10 made in the wall of a part of a pylon member. The slot 10 can provide an access to the latch 2. A portion of the latch 2 can protrude from the main recess 1 through the slot 10 beyond the overall dimensions of the part of the pylon member. In addition, the handle 6 can be located in the slot 10 with a possibility of movement therein. The width of the slot 10 can be equal to the maximum width of the main recess 1. For example, the main recess 1 in the part of the pylon member is made as a groove. At least the external surface of the latch 2 can be featured at least partially with grooves. Also, the main recess 1 can be made either in at least one part for the pole 3 of the pylon or in at least one part for the lower support 4 or in at least one part for the upper support 5. At least one counter-recess 8 can be made in at least one part of the pylon member. The counter-recess 8 made in at least in one part of the pylon and can have the shape of a (through or blind) hole, a groove (vertical or horizontal), a slot or another shape.

The condition of sufficiency of the magnetic attraction force acting between the magnetic unit of the magnetic lock and its member for holding the latch 2 inside the main recess 1 in the required position determines the number and parameters of the permanent magnets 7, which compose the magnetic unit of the magnetic lock, as well as characteristics of the materials used for the manufacture of parts of the magnetic lock.

The magnetic unit of the magnetic lock can be made in the form of a monolithic permanent magnet 7 made of magnetically hard material, as well as in the form of a set of monolithic permanent magnets 7, each of them made of magnetically hard material.

The magnetic unit of the magnetic lock made as a monolithic permanent magnet 7 or as a set of monolithic permanent magnet 7 can be installed on a part, which is a member of the magnetic lock, with the help of magnetic attraction forces or with the help of glue. Since blind or through holes of various cross-sections, grooves of various cross-sections, slots and so on can be made to install the permanent magnet 7 on the parts, it can be summarized that in order to install the permanent magnet 7 on the parts, a cavity 11 for the permanent magnet 7 is made thereon. The permanent magnet 7 can be installed in the cavity 11 on the part using the interference fit installation method, edge deformation method of the cavity 11, and other known methods. A part of magnetically permeable material can be installed between the permanent magnet 7 and at least one wall of the cavity 11.

The geometric dimensions and shape of the cavity 11 made in the pylon part for the permanent magnet 7, as well as the geometrical dimensions and shape of the permanent magnet 7, are coordinated with each other and are selected based on the installation conditions of the permanent magnet 7 in the cavity 11 in order to create the obstacle to the movement of the latch 2 in the main recess 1. The shape of the permanent magnet 7 can be multilateral, rectangular, cylindrical or others.

The best option for the proposed technical solution is a situation wherein the permanent magnet 7 is installed in the cavity 11 in the part with a sinking 12 relative to the surface of the outer wall of the part wherein the cavity 11 is made in order to avoid damage to the surface of the permanent magnet 7 as a result of mechanical contact with other objects.

The best option for the claimed technical solution is a situation where the permanent magnet 7 is installed in the cavity 11 in the part made of magnetically soft material, for example, steel, with sinking 12 relative to the surface of the outer wall of the pylon part, wherein the cavity 11 is made. By selecting the depth of sinking 12, the distance from the permanent magnet 7 to its mating part can be adjusted in order to regulate the force of magnetic attraction acting between them and, in turn, to make this force less than the force of magnetic attraction acting between the permanent magnet 7 and the walls of the cavity 11 wherein it is installed. As a result, the permanent magnet 7 installed in the cavity 11 on the part made of a magnetically soft material is held inside the cavity 11 due to its own magnetic force without the use of additional means (glue, sealant, etc.) and does not come into contact with its mating part. This facilitates the installation of the permanent magnet 7 in the cavity 11 and its replacement in cases where the permanent magnet 7 loses some of its strength or is destroyed.

When the latch 2 is located only in the main recess 1 of the pylon member and beyond the counter-recess 8 of another pylon member, where the pole 3 of the pylon is one of these members, the pole 3 can be rotated, and, therefore, it is in the dynamic operating mode. When a portion of the latch 2 is located in the main recess 1 of the pylon member, and, simultaneously, another portion of the latch 2 is located in the counter-recess 8 of another pylon member, where the pole 3 of the pylon is one of these members, the pole 3 cannot be rotated, and, therefore, the pylon is in the static operating mode. To switch the pylon from one operating mode to another it is necessary to move the latch 2 in the main recess 1 from one position to another. In accordance with the disclosed technical solution, the main recess 1 for the latch 2 opens from the side of its lateral wall towards the outer space around the pylon part, wherein the main recess 1 is located. Therefore, the control action for the latch 2 movement in the main recess 1 is provided directly upon the latch 2 or upon it's the handle 6 from the side of the lateral wall of the latch 2, through the open space in the wall of the pylon part or upon a part of the latch 2 or upon its handle 6 protruding through the open space in the wall of the pylon part into the outer space, which surrounds this pylon part, where the main recess 1 is made. In this case, the latch 2 is fixed in the required position in the main recess 1 by the magnetic attraction force of the magnetic unit of the magnetic lock, which comprises at least one permanent magnet 7.

To fix the latch 2 in the desired position in the main recess 1, friction spacers, a ball with a spring installed in a blind hole in the wall of the main recess for the latch, and other known devices for fixing the latch in the main recess 1 can be used.

### Description of the Embodiments of the Invention

Operation of the device for switching the operating mode of a dynamic pylon is explained in the following examples.

Example 1. Fig. 1 shows an axial section of a portion of the dynamic pylon with the device for switching the operating mode of a dynamic pylon, when the lower support 4 of the pylon is located on the lower bearing surface for the pylon (for example, on the stage floor). The shaft 14 and the pipe 15, which are connected to each other using the interference fit installation method, are parts of the pole 3. The shaft 14 can comprise multiple parts and be dismountable. The other parts of the pole of the pylon are not shown in Fig. 1. The lower support 4 is made as a monolithic part comprising a collar 16 and a disc 17. The other parts of the support 4 are not shown in Fig. 1. Bearing 13 is installed in the collar 16 and the shaft 14 is installed into the inner ring of the bearing 13.

Device for switching the operating mode of a dynamic pylon comprises:
- the latch 2 made as a rod of rectangular cross-section. Grooves are made on the surface of the latch 2, which faces an outer space, which surrounds the shaft 14. The latch 2 can be made as a pin of circular cross-section with a lateral surface, which features grooves;
- the shaft 14 of the pole 3 with the main recess 1 for the latch 2 is made as a groove of rectangular cross-section opened downward and into the outer space, which surrounds the shaft 14. A portion of the latch 2 protrudes from the main recess 1 towards the outer space beyond the overall dimensions of the shaft 14. The position of the latch 2 in the main recess 1 of the shaft 14 is shown in Fig. 2;
- the collar 16 of the support 4 with the counter-recess 8 made as a groove of rectangular cross-section opened towards the outer space and upward. In the collar 16 of the support 4, multiple counter-recesses 8 can be provided;
- a magnetic lock, which creates an obstacle for the spontaneous movement of the latch 2 inside the main recess 1 of the shaft 14 of the vertical crossbeam 3 and for unauthorized removal of the latch 2 from the main recess 1.

The magnetic lock comprises:
The first member of the magnetic lock - a magnetic unit comprising multiple permanent magnets 7, which are monolithic cylindrically shaped parts made of magnetically hard material;
The second member of the magnetic lock - the shaft 14 made of magnetically soft material, for example, steel with the permanent magnets 7. Fig. 3 shows the detail view A of the drawing presented in Fig. 1 where position of the permanent magnet 7 onto the shaft 14 is displayed.

Each permanent magnet 7 is installed in the dedicated cavity 11, which is made in the wall of the main recess 1 of the shaft 14, with the sinking 12 relative to the wall surface of the main recess 1 to avoid damage to the surface of the permanent magnet 7 from contact with the surface of the latch 2. The depth of the sinking 12 is selected so that the force of magnetic attraction of the permanent magnet 7 to the latch 2 is less than the force of its attraction to the walls of the cavity 11 made in the wall of the main recess 1. Thus, the permanent magnet 7 is fixed in the cavity 11 by its own magnetic force. Application of additional means, for example, glue, or methods, for example, the interference fit method, is not required. In this case the force of magnetic attraction acting between the magnetic unit of the magnetic lock comprising the permanent magnets 7 and the latch 2 is sufficient to hold the latch 2 in the required position in the main recess 1;
The third member of the magnetic lock - latch 2 - is made of magnetically soft material, for example, steel.

The device for switching the operating mode of a dynamic pylon shown in Fig. 1 operates as follows:
Under the condition shown in Fig. 1, the pylon is in dynamic operating mode where the latch 2 is located only in the main recess 1 of the shaft 14 of the pole 3 and outside the counter-recess 8 of the collar 16 of the support 4 and the pole 3 can be rotated. In this position the latch 2 is held by the magnetic attraction force acting between the magnetic unit of the magnetic lock comprising a few permanent magnets 7 installed in the cavities 11 in the vertical wall of the main recess 1 of the shaft 14, which is the second member of the magnetic lock, and the latch 2, which is the third member of the magnetic lock. As a result of the action of this force the latch 2 imposes pressure on the inner vertical wall of the main recess 1 and causes thereby a friction force between the latch 2 and the vertical wall of the main recess 1, which prevents the movement of the latch 2 along the surface of the vertical wall of the main recess 1.

To switch the pylon to a static operating mode it is necessary to position the latch 2 above the counter-recess 8 by turning the pole 3 clockwise or counter-clockwise. Then a control action in the downward direction is to be performed, for example, by acting with foot upon the surface of the latch 2 protruding from the main recess 1 of the shaft 14 into the outer space beyond the overall dimensions of the shaft 14. As a result of the control action the lower part of the latch 2 which is featured with lead-in sections is partially sunk into the counter-recess 8. Further it is necessary to continue performing a control action for the latch 2 to drop down into the counter-recess 8 and to reach its lower end. In this position the latch 2 is held by the attraction force of the magnetic unit of the magnetic lock and the friction force acting between the latch 2 and the lower end of the counter-recess 8. In this position a portion of the latch 2 is located in the main recess 1 and, simultaneously, another portion of the latch 2 is located in the counter-recess 8 and. Therefore, the latch 2 creates a mechanical obstacle to the rotation of the vertical crossbeam. The pylon is in the static operating mode.

To return the pylon to the dynamic operating mode it is necessary to perform a control action in the upward direction, for example, by acting with foot upon the surface of the latch 2 protruding from the main recess 1 towards the outer space beyond the overall dimensions of the shaft 14 until the latch 2 reaches the upper end of the main recess 1. In this position the latch 2 is held by the attraction force of the magnetic unit of the magnetic lock and the friction force acting between the latch 2 and the vertical wall of the main recess 1. Therefore, the latch 2 is located only in the main recess 1 and beyond the counter-recess 8 and does not create a mechanical obstacle to the pole 3 rotation. The pylon is in the dynamic operating mode.

If the latch 2, which is the third member of the magnetic lock the permanent magnets 7 (the first member of the magnetic lock) whereof are installed on the shaft 14 (the second member of the magnetic lock), is made, for example, of non-magnetic stainless steel, then the latch 2 comprises at least one part made of a magnetically soft material, for example, steel (i.e. made at least partially of a magnetically soft material) or at least one part made of a magnetically hard material - a permanent magnet (not shown in Fig. 1).

A performer of exercises on the pylon a portion whereof is shown in Fig. 1, switches it from dynamic operating mode into static one as follows: having rotated the pole 3 clockwise or counter-clockwise the performer positions the latch 2 above the counter-recess 8. To do this a performer is to see both the latch 2 and counter-recess 8 of the collar 16 of lower support at the same time. Then, for example, with a foot the performer makes a control action on the surface of the latch 2 protruding from the main recess 1 of the shaft 14 and moves it down until it stops. The pylon is in the static operating mode.

Returning the pylon from static to dynamic operating mode is performed as follows: by acting, for example, with foot upon the surface of the latch 2 protruding from the main recess 1 of the shaft 14 of the vertical crossbeam switches the latch 2 upward until it stops. The pylon is in the dynamic operating mode.

Example 2. Fig. 4 shows an axial section of a portion of the dynamic pylon with the device for switching its operating modes when the lower support 4 of the pylon is located on the lower bearing surface for the pylon (for example, on the stage floor). The shaft 14 and the pipe 15, which are parts of pole 3, are connected to each other using the interference fit installation method. The shaft 14 can comprise a few parts and be dismountable. The other parts of the pole 3 of the pylon are not shown in Fig. 4. The lower support 4 is performed as a monolithic part comprising the collar 16 and the disc 17. The other parts of the support 4 are not shown in Fig. 4. The bearing 13 is installed in the collar 16, and the shaft 14 is installed into the inner ring of the bearing 13.

The device for switching the operating mode of a dynamic pylon comprises:
- the latch 2 shaped as a rod of rectangular cross-section. Grooves are made on the surface of the latch 2, which faces outer space;
- the collar 16 of the support 4 with the main recess 1 made as a groove of rectangular cross-section opened upward and into the outer space. The groove is formed by the walls of a vertical slot of rectangular cross-section made in the wall of the collar 16 and the outer surface of the outer ring of the bearing 13 installed in the collar 16. The latch 2 partially protrudes from the main recess 1 towards the outer space beyond the overall dimensions of the collar 16 of the lower support;
- the shaft 14 of the pole 3 with the counter-recess 8 for the latch 2 formed as a groove opened towards the outer space and downward. In the shaft 14 a few counter-recesses 8 for the latch 2 can be provided;
- the magnetic lock, which creates an obstacle for the spontaneous movement of the latch 2 inside the main recess 1 of the shaft 14 and for unauthorized removal of the latch 2 from the main recess 1.

The magnetic lock comprises:
The first member of the magnetic lock-magnetic unit comprising multiple permanent magnet 7, which are monolithic cylindrically shaped parts made of magnetically hard material;
The second member of the magnetic lock - the latch 2 made of steel with a magnetic unit comprising several permanent magnets 7 installed with glue in cavities 11 made in the form of blind cylindrical holes in the vertical wall of the latch 2 faced to the outer surface of the outer ring of the bearing 13;
The third member of the magnetic lock - outer ring of the bearing 13 performed of magnetically soft material - steel.

The device for switching the operating mode of a dynamic pylon shown in Fig. 4 operates as follows:
Under the condition shown in Fig. 4 the pylon is in the static operating mode where a portion of the latch 2 is located in the main recess 1 in the collar 16 of the lower support and, simultaneously, another portion of the latch 2 is located in the counter-recess 8 of the shaft 14 of the vertical crossbeam 3. Therefore, the latch 2 creates a mechanical obstacle to the vertical crossbeam 3 rotation. In this position the latch 2 is held by the magnetic attraction force acting between the magnetic unit of the magnetic lock (the first member of the magnetic lock) comprising a few permanent magnets 7 installed with glue in the cavity 11 which are blind holes in the vertical wall of the latch 2 (the second member of the magnetic lock) and the outer ring of the bearing 13 (the third member of the magnetic lock). As a result of the influence of the magnetic attraction force acting between the members of the magnetic lock the latch 2 imposes pressure on the outer surface of the outer ring of the bearing 13. As a result of this pressure a friction force arises between the latch 2 and the outer ring of the bearing 13 which prevents the movement of the latch 2 along the surface of the outer ring of the bearing 13.

To switch the pylon to a dynamic operating mode a control action in the downward direction is to be performed, for example, by acting with foot upon the surface of the latch 2 protruding from the counter-recess 8 beyond the overall dimensions of the shaft 14 into the outer space, and from the main recess 1 beyond the overall dimensions of the collar 16 until the latch 2 reaches the lower end of the main recess 1. In this position the latch 2 is held by the attraction force of the magnetic unit of the magnetic lock and the friction force between the latch 2 and the lower wall of the main recess 1. Therefore, the latch 2 is located only in the main recess 1 and beyond the counter-recess 8 and does not create a mechanical obstacle to the pole 3 rotation. The pylon is in the dynamic operating mode.

To switch the pylon to a static operating mode it is necessary to position the counter-recess 8 above the latch 2 by rotating the pole 3 clockwise or counterclockwise. Then a control action in the downward direction is to be performed, for example, by acting with foot upon the surface of the latch 2 protruding from the main recess 1 of the collar 16 into the outer space beyond the dimensions thereof. As a result of this action the upper part of the latch 2, which is featured with lead-in sections, is partially sunk into the counter-recess 8. Further, it is necessary to continue performing a control action upon the part of the latch 2 protruding outside for the latch 2 to lift up in the counter-recess 8 and reach its upper end. In such position the latch 2 is held by the attraction force of the magnetic unit of the magnetic lock and the friction force between the latch 2 and the outer ring of the bearing 13. In the situation obtained by this method, a portion of the latch 2 is located in the main recess 1 and, simultaneously, another portion of the latch 2 is located in the counter-recess 8. Therefore, the latch 2 creates a mechanical obstacle to the pole 3 rotation. The pylon is in the static operating mode.

A performer of exercises on the pylon a portion whereof is shown in Fig. 4 switches the pylon from dynamic operating mode into static one as follows: having rotated the pole 3 clockwise or counterclockwise the performer positions the counter-recess 8 of the shaft 14 of the vertical crossbeam 3 above the latch 2. To do this a performer is to see both the counter-recess 8 of the shaft 14 of the pole 3 and the latch 2. Then, for example, by acting with foot the performer makes a control action on the surface of the latch 2 protruding from the main recess 1 of the collar 16 of the support 4 and moves the latch upward until it stops. The pylon is in the static operating mode.

Returning the pylon from static to dynamic operating mode is performed as follows: acting, for example, with foot upon the surface of the latch 2 protruding from the counter-recess 8 of the shaft 14 of the pole 3 and from the main recess 1 of the collar 16 of the support 4, a performer switches the latch 2 down until it stops. The pylon is in the dynamic operating mode.
- Fig. 5 shows two dynamic pylons with the devices for switching the operating modes located both at the lower bearing surface for the pylon (for example, the stage floor) and the upper bearing surface for the pylon (for example, the stage ceiling). But for the dynamic pylon shown in Fig. 5 at the left the screw 9 of the screw assembly of the pylon is located at the bottom of the pole 3 that provides convenience for the installation and dismantling of the pylon at the operational location. In the dynamic pylon shown in Fig. 5 on the right the screw 9 of the screw assembly of the pylon is located at the top of the pole 3 that provides convenience for the exercise to be performed on the pole 3.

Example 3. Fig. 6 shows an axial section of a portion of the dynamic pylon with the device for switching the operating modes when the lower support 4 of the pylon is located on the lower bearing surface (for example, on the stage floor). The shaft 14 and the pipe 15 are connected to each other using the interference fit installation method and are parts of the pole 3. The shaft 14 can comprise a few parts and be dismountable. The other parts of the pole 3 of the pylon are not shown in Fig. 6. The collar 16 and the disc 17 are parts of the support 4 joined together with screws. The screw connections and other parts of the lower support are not shown in Fig. 6. The bearing 13 is installed in the collar 16 and the shaft 14 is installed into inner ring of the bearing 13.

The device for switching the operating mode of a dynamic pylon comprises of:
- The latch 2 made as a pin of round cross-section featured with the handle 6;
- The shaft 14 of the pole 3 with the main recess 1 made as a blind hole of the round crosssection. In the wall of the shaft 14 the slot 10 is provided, said slot connects the main recess 1 with the outer space around the shaft 14 and opens into the outer space around the shaft 14 and into the internal space of the main recess 1. The handle 6 can be located in the slot 10 with a possibility of movement therein. The installation of the latch 2 with the handle 6 into the main recess 1 with the slot 10 of the shaft 14 is shown in Fig. 7;

- The collar 16 of the support 4 with the counter-recess 8 made as a blind hole of the round cross-section;
- A magnetic lock intended to create an obstacle for the spontaneous movement of the latch 2 inside the main recess 1 downward from the upper end.

The magnetic lock comprises three members:
The first member of the magnetic lock is the magnetic unit comprising one permanent magnet 7, which is a monolithic cylindrically shaped part made of magnetically hard material;
The second member of the magnetic lock of the shaft 14 with the main recess 1. The shaft 14 is made of magnetically soft material, for example, steel;
The third member of the magnetic lock is the latch 2 made of magnetically soft material, for example, steel.

The presence of force interaction of the permanent magnet 7 with the latch 2 and with the upper end of the main recess 1 of the shaft 14 to hold the latch 2 at the upper end of the main recess 1 depends only on the relative position of the members, which form the magnetic lock, and does not depend on the element to whose surface the permanent magnet 7 is permanently fixed by the force of magnetic attraction.

When the permanent magnet 7 is permanently fixed by the force of magnetic attraction at the upper end of the main recess 1, it is necessary that the distance from the lower end of the permanent magnet 7 to the surface of the collar 16 of the support 4 should be greater than the length of the latch 2, so that the force of magnetic interaction between the permanent magnet 7 and the latch 2 (in its the lower position at the surface of the collar 16 of the support 4) is less than the gravity of the latch 2 and therefore said force cannot attract the latch 2 to the permanent magnet 7.

When the permanent magnet 7 is permanently fixed by the force of magnetic attraction at the upper end of the latch 2, it is necessary that the distance from the upper end of the main recess 1 to the surface of the collar 16 of the support 4 to be greater than the length of the latch 2 including the height of the permanent magnet 7, so that the force of magnetic interaction between the permanent magnet 7 and the latch 2 (in its lower position at the surface of the collar 16 of the lower support) is less than the total gravity of the permanent magnet 7 and the latch 2, and therefore said force cannot attract the permanent magnet 7 with the latch 2 to the upper end of the main recess 1.

The device for switching the operating mode of a dynamic pylon shown in Fig. 6 operates as follows:
Under the condition shown in Fig. 6 the pylon is in dynamic operating mode where the latch 2 is located only in the main recess 1 of the shaft 14 of the pole 3 and outside the counter-recess 8 of the collar 16 of the support 4, and the pole 3 can rotate. In this position the permanent magnet 7 is the first member of the magnetic lock, which is located inside the main recess 1 and fixed by the force of magnetic attraction at the upper end of the main recess 1 of the shaft 14, which is the second member of the magnetic lock. At the same time the permanent magnet 7 fixes the latch 2, which is the third member of the magnetic lock, by the force of magnetic attraction at its lower end.

To switch the pylon to a static operating mode it is necessary to act in the downward direction upon the handle 6 of the latch 2, until the latch 2 stops interacting with the magnetic unit or until the magnetic unit stops interacting with the upper end of the main recess 1. Under the gravity and/or as a result of action upon the handle 6, the latch 2 moves down and (if it fails to get into the counter-recess 8) stops when it reaches the surface of the collar 16. Further the pole 3 is to be turned, so that the latch 2 is positioned above the counter-recess 8. Under the gravity the latch 2, provided with lead-in sections, is partially sunk into the counter-recess 8. Since the latch 2, due to its small geometric dimensions, has a low weight and a friction force acts between the latch wall 2 and the wall of the main recess 1, then the gravity of the latch 2 can be insufficient to fully sink said latch into the counter-recess 8. In such a situation it is necessary to continue acting on the handle 6, with the simultaneous reverse rotation of the pole 3, and thereby to ensure that the lower end of the latch 2 reaches the lower end of the counter-recess 8, for reliable fixation of the pylon in a static operating mode. In this situation, a portion of the latch 2 is located in the main recess 1 and, simultaneously, another portion of the latch 2 is located in the counter-recess 8. Therefore, the latch 2 creates a mechanical obstacle to the pole 3 rotation. The pylon is in the static operating mode.

To return the pylon to the dynamic operating mode, a control action is to be performed in the downward direction upon the handle 6 of the latch 2 until the latch 2 approaches the lower end of the permanent magnet 7, or the permanent magnet 7 approaches the upper end of the main recess 1 at a distance, where the permanent magnet 7 starts interacting with the latch 2 or with the upper end of the main recess 1. As a result of the action of the force of attraction of the permanent magnet 7 the latch 2 moves to the permanent magnet 7, or the permanent magnet 7 together with the latch 2 move to the upper end of the main recess 1. In both cases the permanent magnet 7 is held at the upper end of the main recess 1, and at the same time holds the latch 2 at its lower end. Therefore, the latch 2 is located only in the main recess 1 and beyond the counter-recess 8 and does not create a mechanical obstacle to the vertical crossbeam 3 rotation. The pylon is in the dynamic operating mode.

If the shaft 14, which is the third member of the magnetic lock, is made of a material that does not exhibit magnetic properties, then in the main recess 1 or, for example, in the groove at its upper end at least one part is installed, said part is made of magnetically soft material, i.e., the shaft 14 is made at least partially of a magnetically soft material. The part made of a magnetically hard material - a permanent magnet - can be installed either in the main recess 1 or in the groove in its upper end (not shown in Fig. 6).

If the latch 2 is made of a material that does not exhibit magnetic properties, then at least one part made of magnetically soft material is installed in the groove in the upper end of the latch 2, i.e., the latch 2 is made at least partially of a magnetically soft material. Or at least one part made of a magnetically hard material, which is a permanent magnet, is installed in the groove in the upper end of the latch 2 (not shown in Fig. 6).
- Fig. 8 repeats the view of the axial section of a portion of the dynamic pylon with the device for switching its operating modes shown in Fig. 6. Design and operational features of the device for switching the operating modes of a dynamic pylon shown in Fig. 6 are applicable to the device shown in Fig. 8 with the exception of the following two design features:
   First, the additional permanent magnet 7 (the upper one in Fig. 8), which is a monolithic cylindrical part made of magnetically hard material, is installed with glue in the cavity 11 on the lower end of the main recess 1 of the shaft 14 made of non-magnetic material, for example, stainless steel. The permanent magnet 7 (the lower one in Fig. 8) is a monolithic cylindrical part made of magnetically hard material installed with glue on the lower end of the latch 2.

Second, the use of an additional permanent magnet 7 installed on the third member of the magnetic lock in the device for switching the operating modes of a dynamic pylon increases the force of interaction between the members of the magnetic lock in the case where these members are located at a distance from each other.

A performer of exercises on the pylon a portion whereof is shown in Fig. 6 switches it from dynamic operating mode into static one as follows: having rotated the pole 3 clockwise or counter-clockwise the performer sets up the handle 6 of the latch 2 in a position where it is convenient to operate it. A performer can regulate the position of the handle 6 visually or by touch: by hand or by foot. By acting, for example, with foot on the handle 6 of the latch 2 a performer moves the handle 6 down until it stops. Then the pole 3 turns clockwise or counter-clockwise until it stops due to the partial sinking into the counter-recess 8 of the latch 2 part which has lead-in sections. By pressing repeatedly the handle 6 and/or reversely rotating the pole 3, a performer moves the handle 6 down until it stops. The pylon is in the static operating mode.

Returning the pylon from static to dynamic operating mode is performed as follows: acting by touch, for example, with foot upon the handle 6 of the latch 2, a performer moves it up to a position wherefrom the latch 2 with the handle 6, without the participation of a performer, moves up and stops in the upper position. The pylon is in the dynamic operating mode.

A mark indicating the location of the counter-recess 8 in the collar 16 of the support 4 of the pylon can be applied to the disc 17.

Example 4. Fig. 9 shows an axial section of a portion of the dynamic pylon with the device for switching the operating modes, where the lower support 4 of the pylon is located on the lower bearing surface (for example, on the stage floor). The bushing 18 and the pipe 15 are connected with an interference fit installation method and form a part of the pole 3. The other parts of the pole 3 are not shown in Fig. 9. The ring 19, the disc 17 and the axle 20 are parts of the lower support. The ring 19 and the disc 17 are joined together with screws. The screw connections and other parts of the support 4 are not shown in Fig. 9. The axle 20 is installed in the holes of the ring 19 and the disc 17. The bearing 13 is installed in the bushing 18 and onto the axle 20.

The device for switching the operating mode of a dynamic pylon comprises of:
- The latch 2 is shaped as a pin of round cross-section, and grooves are made on its lateral surface;
- The bushing 18 of the pole 3 with the main recess 1 made as a blind hole of the round cross-section. The slot 10, which is formed in the lateral wall of the bushing 18 of the pole 3, connects the main recess 1 with the outer space, which surrounds the bushing 18 and opens into the outer space and downward. A part of the latch 2 protrudes from the main recess 1 towards the outer space through the slot 10 beyond the overall dimensions of the ring of the bushing 18. The installation of the latch 2 into the main recess 1 with the slot 10 of the bushing 18 is shown in Fig. 10;
- The ring 19 of the lower support with the counter-recess 8 opens into the outer space and upward. The counter-recess Counter recess 8 is formed by the vertical walls of the groove provided in the ring 19 and the upper surface of the disc 17 of the support 4;
- The magnetic lock intended to create an obstacle for the spontaneous movement of the latch 2 inside the recess 1 downward from the upper end.

The magnetic lock comprises:
The first member of the magnetic lock - permanent magnet 7, which is a monolithic cylindrically shaped part made of magnetically hard material;
The second member of the magnetic lock - latch 2 made of magnetically soft material, for example, steel. In the upper end of the latch 2, a cavity 11 of a cylindrical shape is made wherein a permanent magnet 7 is fixed by means of glue;
The third member of the magnetic lock - the bushing 18 of the pole 3 with the main recess 1. The bushing 18 is made of magnetically soft material, for example, steel. The upper end of the main recess 1 is intended for the engagement with the permanent magnet 7.

When the permanent magnet 7 is fixed at the upper end of the latch 2 in the cavity 11, for example, using glue, the distance from the upper end of the main recess 1 till the surface of the ring 19 of the support 4 is required to be greater than the length of the latch 2. The force of magnetic interaction between the permanent magnet 7 and the upper end of the main recess 1, when latch 2 is in its lower position at the surface of the ring 19, is less than the gravity of the latch 2, and therefore cannot attract the latch 2 to the upper end of the main recess 1.

Device for switching the operating mode of a dynamic pylon shown in Fig. 9 operates as follows:
Under the condition shown in Fig. 9 the pylon is in dynamic operating mode - the latch 2 is located only in the main recess 1 and outside the counter-recess 8. The pole 3 can rotate. In this position the permanent magnets 7 (the first member of the magnetic lock) installed in the upper end of the latch 2 in the cylindrical cavity 11 (the second member of the magnetic lock) fixes the latch 2 at the upper end of the main recess 1 (the third member of the magnetic lock) by the magnetic attraction force.

To switch the pylon to a static operating mode an action is to be performed in the downward direction upon the part of the latch 2 protruding from the main recess 1, until the permanent magnets 7 stop interacting with the upper end of the main recess 1. Under the gravity and/or as a result of ongoing action the latch 2 moves down. If the latch 2 fails to get in the counter-recess 8 at the first attempt, then it stops as soon as it reaches the surface of the ring 19. Further the pole 3 is to be turned so that the latch 2 is above the counter-recess 8. Under the gravity and/or as a result of ongoing action upon the latch 2, which has lead-in sections, partially sinks into the counter-recess 8. Next, the position of the latch 2 in the counter-recess 8 is to be corrected, by continuing to act on the latch 2 and/or reversibly rotating the pole 3. That ensures the latch 2 to drop down into the counter-recess 8 to its lower end. In the situation obtained by this method, a portion of the latch 2 is located in the main recess 1 and, simultaneously, another portion of the latch 2 is located in the counter-recess 8. Therefore, the latch 2 creates a mechanical obstacle to the pole 3 rotation. The pylon is in the static operating mode.

To return the pylon to the dynamic operating mode a control action is to be performed in the downward direction, for example, with foot upon a portion of the latch 2 protruding towards the outer space beyond the overall dimensions of the bushing 18 of the pole 3, until the latch 2 with the permanent magnet 7 approaches the upper end of the main recess 1 at a distance where the permanent magnet 7 start interacting with the upper end of the main recess 1. As a result of the action of the force of attraction of the permanent magnet 7, the latch 2 together with the permanent magnet 7 moves to the upper end of the main recess 1. In the obtained situation, the latch 2 is located only in the main recess 1 and beyond the counter-recess 8, and does not create a mechanical obstacle to the pole 3 rotation. The pylon is in the dynamic operating mode.

If the bushing 18 of the pole 3 is made of non-magnetic material, then at least one part made of magnetically soft material, for example, steel, is installed in the main recess 1 or in the groove located in the upper end of the main recess 1. This means that the bushing 18 is made at least partially of magnetically soft material. A part made of a magnetically hard material - the permanent magnet 7 - can be installed in the main recess 1 or in the groove in its upper end (not shown in Fig. 9).

The performer of exercises on the pylon, partially shown in Fig. 9, switches it from dynamic operating mode into static one as follows: having rotated the pole 3 clockwise or counterclockwise, the performer sets up the latch 2 in position where it is easy to operate it A performer can regulate the position of the latch 2 visually or by touch: by hand or foot. A performer acting, for example, with foot on the latch 2, moves it down until it stops. Then the pole 3 turns clockwise or counter-clockwise until it stops that is an indication of alignment of the latch 2 with the counter-recess 8 and its partial sinking therein. By pressing repeatedly the latch 2 and/or reversely rotating the pole 3, a performer moves the latch 2 down until it stops. The pylon is in the static operating mode.

Returning the pylon from static to dynamic operating mode is performed as follows: acting by touch, for example, with foot on the latch 2, a performer moves it up to a position when the latch 2 moves up and stop in the upper position without the participation of a performer. The pylon is in the dynamic operating mode.

Example 5. The view of the axial section of a portion of the dynamic pylon with the device for switching its operating modes shown in Fig. 6 is depicted also in Fig. 11. Design description and operational features of the device for switching the operating modes of a pylon shown in Fig. 6 are applicable to the device shown in Fig. 11 with the exception of one design and one operational features.

The design feature is that the additional permanent magnet 7 (the lower one in Fig. 11), which is a monolithic cylindrical part made of magnetically hard material installed, for example, with glue on the lower end of the counter-recess 8 for interaction with the latch 2 made of magnetically soft material, for example, steel.

An additional permanent magnet 7, as the first member of the second magnetic lock, the collar 16 with the counter-recess 8, wherein the additional permanent magnet 7 is installed as the second member of the second magnetic lock, the latch of the support 2 made at least partially of magnetically soft material, for example, steel, as the third member of the second magnetic lock form together the second magnetic lock. The second magnetic lock is intended to move the latch 2 from the position where the latch 2 is above the counter-recess 8 towards the bottom of the counter-recess 8 and to hold the latch 2 at the end of the counter-recess 8, in case where the support 4 is installed on the upper bearing surface, such the stage ceiling. Therefore, the pylon lower support becomes the upper support of the pylon and the pylon upper support becomes the lower support of the pylon.

Operation of the device for switching the operating mode of a dynamic pylon shown in Fig. 11 differs from operation of the device for switching the operating modes of the pylon shown in Fig. 6 in that the movement of the latch 2 into the depth of the counter-recess 8 takes place as a result of the action on the latch 2 of the magnetic attraction force of the additional permanent magnet 7 installed at the lower end of the counter-recess 8. This movement of the latch 2 does not require human participation.

An operational feature of the device for switching the operating mode of a dynamic pylon shown in Fig. 11 that makes said device distinct from the device shown in Fig. 6 is that a performer of the exercises on the pylon does not need to continue the action on the handle 6 after the members of the first magnetic lock stop their interaction, said members are the upper permanent magnet 7 and the latch 2 or the upper end of the main recess 1 and the upper permanent magnet 7. After alignment of the latch 2 with the counter-recess 8, the latch 2, as the third member of the second magnetic lock, interacts with the lower permanent magnet 7, which is the first member of the second magnetic lock, and moves until it is completely sunk into the counter-recess 8 of the collar 16, which is the second member of the second magnetic lock at a speed exceeding the physiological athletic ability of a performer.

Example 6. The view of the axial section of a portion of the dynamic pylon with the device for switching its operating modes shown in Fig. 9 is depicted also in Fig. 12. Design and operational features of the device for switching the operating modes of the dynamic pylon shown in Fig. 9 are applicable to the device shown in Fig. 12, with the exception of one design and two operational features.

The design feature is that the additional permanent magnet 7 (the lower one in Fig. 12), which is a monolithic cylindrical part made of magnetically hard material, is installed with glue on the lower end of the latch 2 in the cavity 11 formed as a hole of a circular cross-section.

In this case an additional permanent magnet 7, as the first member of the second magnetic lock, the latch 2 in the cavity 11 at the lower end of which this permanent magnet 7 is installed, as the second member of the second magnetic lock, and the ring 19 of the support 4 made at least partially of magnetically soft material, for example, steel, as the third member of the second magnetic lock, form together the second magnetic lock. The second magnetic lock is intended to move of the latch 2 to the ring 19 and to hold the latch 2 at the ring 19 in case where the support 4 is installed on the upper bearing surface for the pylon, for example, the stage ceiling. Therefore, the lower support becomes the upper support, and the upper support becomes the lower support.

In this case an additional permanent magnet 7, as the first member of the third magnetic lock, the latch 2 in the cavity 11 at the lower end whereof this permanent magnet 7 is installed, as the second member of the third magnetic lock, and the disc 17 of the support 4, made at least partially of magnetically soft material, for example, steel, as the third member of the third magnetic lock, form the third magnetic lock. The third magnetic lock is designed to move the latch 2 from the position, when the latch 2 is located above the counter-recess 8, towards the bottom of the counter-recess 8, and to hold the latch 2 in a position where its part is located inside the counter-recess 8, in the case where this support 4 is installed on the upper bearing surface, such as the stage ceiling. Therefore, the lower support becomes the upper support, and the upper support becomes the lower support.

In this case the distance from the upper end of the main recess 1 for the latch 2 in the bushing 18 of the pole 3 to the ring 19 of the support 4 is greater than the length of the latch 2, so much that the latch 2 can be moved away from the upper end of the main recess 1 downward by the distance at which the magnetic attraction force between the magnetic unit comprising at least one permanent magnet 7 installed in the cavity 11 on the upper end of the latch 2 and the upper end of the main recess 1 becomes less than the magnetic attraction force between the permanent magnet 7 installed in the cavity 11 at the lower end of the latch 2 and the ring 19 of the support 4.

Operation of the device for switching the operating mode of a dynamic pylon shown in Fig. 12 differs from operation of the device for switching the operating mode of a dynamic pylon shown in Fig. 6 in that the movement of the latch 2 to the ring 19 of the support 4 begins after a short control action upon the part of the latch 2 protruding from the bushing 18, resulting in the latch 2 move to a position where the magnetic attraction force between the permanent magnet 7 installed in the cavity 11 at the upper end of the latch 2 and the upper end of the main recess 1 becomes less than the magnetic attraction force between the permanent magnet 7 installed in the cavity 11 at the lower end of the latch 2 and the ring 19 of the support 4. Further movement of the latch 2 to the ring 19 takes place as a result of magnetic interaction between the permanent magnet 7 installed in the cavity 11 at the lower end of the latch 2 and the ring 19 of the support 4, which are the members of the second magnetic lock. The movement of the latch 2 to the counter-recess 8 takes place as a result of magnetic interaction between the permanent magnet 7, installed in the cavity 11 at the lower end of the latch 2, and the disc 17 of the support 4, which are the members of the third magnetic lock.

The operational feature of the device for switching the operating mode of a dynamic pylon shown in Fig. 12, which makes it distinct from the device shown in Fig. 9, is that a performer of the exercises on the pylon does not need to continue the action on the latch 2 after the upper permanent magnet 7 and the upper end of the main recess 1 of the bushing 18, which are the members of the first magnetic lock, stop their interaction. For a performer it is sufficient to move the latch 2 from the upper end of the main recess 1 to a distance where the magnetic attraction force between the permanent magnet 7, which is installed in the cavity 11 on the lower end of the latch 2, and the ring 19 of the support 4, moves the latch 2 to the surface of the ring 19 at a speed exceeding the physiological athletic ability of a performer.

The second operational feature is that after the alignment of the latch 2 with the counter-recess 8, the lower permanent magnet 7 as the first member of the third magnetic lock, interacts with the disc 17, which is the third member of the third magnetic lock, and moves the latch 2 (which is the second member of the third magnetic the lock) until it is completely sinks into the counter-recess 8 of the ring 19 at a speed exceeding the physiological athletic ability of a performer.

### Description of the Preferred Embodiment

Example 7. The view of the axial section of a portion of the dynamic pylon with the device for switching its operating modes shown in Fig. 12 is depicted also in Fig. 13. Design and operational features of the device for switching the operating modes of a pylon, shown in Fig. 12, are applicable to the device shown in Fig. 13, with the exception of one design and one operational feature.

The design feature is that the additional permanent magnet 7 (the lower one in Fig. 13), which is a monolithic cylindrically shaped part made of magnetically hard material installed with glue in a cavity 11 made as a through hole of a stepped shape in the disc 17 of the support 4, and located opposite the permanent magnet 7 installed in the cavity 11 in the lower end of the latch 2. There are two gaskets 21 made of magnetically permeable material positioned on the upper end of the permanent magnet 7 in the cavity 11 in the disc 17 to protect the permanent magnet 7 from mechanical contacts with the latch 2.

The additional permanent magnet 7 (the lower one in Fig. 13) installed in the cavity 11 in the disc 17, considered earlier in the example 6 as the third member of the third magnetic lock, increases the force of magnetic interaction between the members of the third magnetic lock, which moves the latch 2 from the position where the latch 2 is located above the counter-recess 8 until its full sinking into the counter-recess 8 and holds the latch 2 in a position where its part is located inside the counter-recess 8.

The operational feature is that the lower permanent magnet 7, installed on the third member of the third magnetic lock, increases the force of magnetic interaction between the members of the third magnetic lock and, therefore, increases the speed of movement of the latch 2 until its full sinking into the counter-recess 8, increases the reliability of the device for switching the operating modes of a pylon and makes it possible to increase the depth of the cavity 8 of the support 4.

Fig. 14 shows two dynamic pylons with devices for switching the operating modes the structure whereof shown in Fig. 13 located both at the lower bearing surface (for example, on the stage floor) and at the upper bearing surface (for example, on the stage ceiling). However, for the dynamic pylon shown in Fig. 14 at the left, the screw 9 of the screw assembly of the pylon is located at the top of the pole 3, that provides convenience for the exercise to be performed on the pole 3. For the dynamic pylon shown in Fig. 14 at the right, the screw 9 of the screw assembly is located at the bottom of the pole 3 that provides convenience for the dismantling the pylon at the operational location.

### Industrial Applicability

Thus, the solution of a problem on creating a new device for switching the operating modes of a dynamic pylon, which makes it possible to facilitate and expedite the process of switching the operating mode of a dynamic pylon, comprises the following: in the new device for switching the operating modes of a dynamic pylon, the main recess for the latch in the pylon member opens from the side of its lateral wall towards the outer space, which surrounds the pylon part wherein said main recess is made; the latch is made as a member of the magnetic lock, which includes at least one permanent magnet, said permanent magnet is installed in a dedicated cavity with a sinking; a few magnetic locks can be installed, said magnetic locks include the permanent magnets, which can ensure the movement of the latch. The process of switching the operating modes of the dynamic pylon is facilitated and expedited because the latch can be moved with one hand or foot without bowing down or sitting down and without interrupting the performance both in the usual manual mode and in the semi-automatic mode when the latch independently moves along the part of the main recess for the latch without the participation of a performer at a speed exceeding the physiological athletic ability of a performer.

The device proposed for switching the operating modes of a pylon facilitates and reduces the cost of pylons manufacturing as it has a simple design that ensures ease of assembly of the pylon and consists of a small number of simple to manufacture parts of small dimensions. Therefore, the technical result of the Invention is fully achieved.

In addition, the disclosed technical solution makes it possible to locate the device for switching the operating modes of a dynamic pylon in the vicinities of the lower support 4 of the pylon, the upper support 5 or both supports simultaneously. This in turn makes it possible to manufacture double-sided poles 3 of pylons and double-sided pylons the design thereof allows to choose a location of the screw of the screw assembly of the pylon.

## Claims

1. A device for switching the operating mode of a dynamic pylon, said device comprising:
a latch (2) that creates a mechanical obstacle to the rotation of a pole (3) of the dynamic pylon; at least one part of a member of the dynamic pylon, said part comprising a main recess (1) for the latch (2), wherein the latch (2) is permanently and at least partially located and can travel linearly inside this main recess (1);
at least one part of another member of the dynamic pylon, said part comprising a counter-recess (8) wherein the latch (2) partially has temporary accommodation for creating a mechanical obstacle to the rotation of the pole (3);
a magnetic lock that creates an obstruction to the travel of the latch (2) within the main recess (1) away from the required position, said obstruction is created by means of magnetic force created by a magnetic unit, said lock comprising:
first, the magnetic unit comprising at least one permanent magnet (7);
second, at least one part that the magnetic unit is installed thereon;
third, at least one part that is periodically temporarily engaged with the magnetic unit,
wherein the main recess (1) communicates at the side of its lateral wall with an outer space, which surrounds the dynamic pylon member part where the main recess (1) is located.

2. The device of claim 1 for switching the operating modes of the dynamic pylon wherein the main recess (1) communicates to the outer space by a slot (10) built in a side wall of at least one part of the dynamic pylon member where said part separates the main recess (1) from outer space, which surrounds the dynamic pylon member part wherein the main recess (1) is located.

3. The device of claim 2 for switching the operating modes of the dynamic pylon wherein the slot (10) provides an access to the latch (2).

4. The device of claim 2 for switching the operating modes of the dynamic pylon wherein the latch (2) extends partially from the main recess (1) through the slot (10) beyond the overall dimensions of at least one dynamic pylon member part where the main recess (1) is provided.

5. The device of claim 1 for switching the operating modes of the dynamic pylon wherein the main recess (1) is a groove located at the lateral wall of at least one part of a member of the pylon.

6. The device of claim 5 for switching the operating modes of the dynamic pylon wherein the latch (2) partially extends beyond the overall dimensions of at least one pylon part where the groove is located.

7. The device of claim 1 for switching the operating modes of the dynamic pylon wherein the latch (2) is the second member of the magnetic lock and at least one dynamic pylon member part where the main recess (1) is located, said part is the third member of the magnetic lock.

8. The device of claim 1 for switching the operating modes of the dynamic pylon wherein the latch (2) is the second member of the magnetic lock and at least one permanent magnet (7) is installed on at least one dynamic pylon member part where the main recess (1) is located, said part is the third member of the magnetic lock.

9. The device of claim 1 for switching the operating modes of the dynamic pylon wherein the latch (2) is the third member of the magnetic lock, and at least one dynamic pylon member part wherein the counter-recess (8) is located is the second member of the magnetic lock.

10. The device of claim 1 for switching the operating modes of the dynamic pylon wherein the permanent magnet (7) is installed in a cavity (11) made for the permanent magnet (7) in the dynamic pylon member part with a sinking (12) in relation to the wall surface of the pylon member part, where the cavity (11) is made.

11. The device of claim 10 for switching the operating modes of the dynamic pylon wherein the permanent magnet (7) is installed in the cavity (11) in the dynamic pylon member part with the sinking (12) in relation to the wall surface of the dynamic pylon member part where said cavity (11) is made so that the force of magnetic attraction between permanent magnet (7) and the walls of the cavity (11) where it is installed is more than force of magnet attraction between the permanent magnet (7) and its mating part.

12. The device of claim 1 for switching the operating modes of the dynamic pylon wherein the device comprises at least one additional magnetic lock that creates an obstacle for the travel of the latch (2) in the main recess (1) by the force of the magnetic unit of an additional magnetic lock, said magnetic unit comprising at least one permanent magnet (7).

13. The device of claim 1 for switching the operating modes of the dynamic pylon wherein the magnetic unit of the magnetic lock provides the travel of the latch (2) in the main recess (1) into the required position from the position where a performer placed it, wherein a magnetic force of the magnetic unit of the magnetic lock acting upon the latch (2) exceeds the sum of the magnetic forces of magnetic units of other magnetic locks acting upon the latch (2), a force of gravity of the latch (2) and forces of friction between the latch (2) and the walls of the main recess (1) and the counter-recess (8).

## Patentansprüche

1. Ein Gerät zum Umschalten des Betriebsmodus eines dynamischen Pylons, wobei das Gerät Folgendes umfasst:
einen Riegel (2), der ein mechanisches Hindernis für die Drehung eines Mastes (3) des dynamischen Pylons bildet; mindestens einen Teil eines Elements des dynamischen Pylons,
wobei dieser Teil eine Hauptaussparung (1) für den Riegel (2) aufweist, wobei der Riegel (2) dauerhaft und zumindest teilweise in dieser Hauptaussparung (1) angeordnet ist und sich darin linear bewegen kann;
mindestens einen Teil eines anderen Elements des dynamischen Pylons, wobei dieser Teil Folgendes umfasst
eine Gegenaussparung (8), in der der Riegel (2) teilweise vorübergehend untergebracht ist, um ein mechanisches Hindernis für die Drehung des Mastes (3) darzustellen;
eine magnetische Sperre, die ein Hindernis für die Bewegung des Riegels (2) in der Hauptaussparung (1) aus der gewünschten Position heraus erzeugt, wobei das Hindernis durch eine magnetische Kraft erzeugt wird, die von einer magnetischen Einheit erzeugt wird, wobei die Sperre Folgendes umfasst:
erstens, mindestens einen Permanentmagneten (7), den die magnetische Einheit umfasst; zweitens mindestens ein Teil, an dem die magnetische Einheit angebracht ist;
drittens mindestens ein Teil, das periodisch vorübergehend mit der magnetischen Einheit in Eingriff gebracht wird, wobei die Hauptaussparung (1) an der Seite ihrer Seitenwand mit einem Außenraum in Verbindung steht, der den dynamischen Teil des Pylonelements umgibt, in dem sich die Hauptaussparung (1) befindet.

2. Das Gerät nach Anspruch 1 zum Umschalten der Betriebsmodi des dynamischen Pylons, wobei die Hauptaussparung (1) über einen Schlitz (10), der in einer Seitenwand mindestens eines Teils des dynamischen Pylonelements eingebaut ist, mit dem Außenraum in Verbindung steht, wobei dieser Teil die Hauptaussparung (1) vom Außenraum trennt, der den Teil des dynamischen Pylonteils umgibt, in dem sich die Hauptaussparung (1) befindet.

3. Das Gerät nach Anspruch 2 zum Umschalten der Betriebsmodi des dynamischen Pylons, wobei der Schlitz (10) einen Zugang zu dem Riegel (2) bietet.

4. Das Gerät nach Anspruch 2 zum Umschalten der Betriebsmodi des dynamischen Pylons, wobei sich der Riegel (2) teilweise von der Hauptaussparung (1) durch den Schlitz (10) über die Gesamtabmessungen mindestens eines Teils des dynamischen Pylonelements erstreckt, in dem die Hauptaussparung (1) vorgesehen ist.

5. Das Gerät nach Anspruch 1 zum Umschalten der Betriebsmodi des dynamischen Pylons, wobei die Hauptaussparung (1) eine Nut ist, die sich an der Seitenwand mindestens eines Teils eines Elements des Pylons befindet.

6. Das Gerät nach Anspruch 5 zum Umschalten der Betriebsmodi des dynamischen Pylons, wobei sich der Riegel (2) teilweise über die Gesamtabmessungen mindestens eines Pylonteils erstreckt, in dem sich die Nut befindet.

7. Das Gerät nach Anspruch 1 zum Umschalten der Betriebsmodi des dynamischen Pylons, wobei der Riegel (2) das zweite Element der magnetischen Sperre ist und mindestens einen dynamischen Pylonelementteil, in dem sich die Hauptaussparung (1) befindet, das dritte Element der magnetischen Sperre ist.

8. Das Gerät nach Anspruch 1 zum Umschalten der Betriebsmodi des dynamischen Pylons, wobei der Riegel (2) das zweite Element der magnetischen Sperre ist und mindestens ein Permanentmagnet (7) an mindestens einem dynamischen Pylonelementteil installiert ist, in dem sich die Hauptaussparung (1) befindet, das dritte Element der magnetischen Sperre ist.

9. Das Gerät nach Anspruch 1 zum Umschalten der Betriebsmodi des dynamischen Pylons, wobei der Riegel (2) das dritte Element der magnetischen Sperre ist und mindestens einen dynamischen Pylonelementteil, in dem sich die Gegenaussparung (8) befindet, das zweite Element der magnetischen Sperre ist.

10. Das Gerät nach Anspruch 1 zum Umschalten der Betriebsmodi des dynamischen Pylons, wobei der Permanentmagnet (7) in einem für den Permanentmagneten (7) vorgesehenen Hohlraum (11) in dem dynamischen Pylonelementteil mit einer Absenkung (12) in Bezug auf die Wandfläche des Pylonelementteils, in der der Hohlraum (11) vorgesehen ist, installiert ist.

11. Das Gerät nach Anspruch 10 zum Umschalten der Betriebsmodi des dynamischen Pylons, wobei der Permanentmagnet (7) in dem Hohlraum (11) in dem dynamischen Pylonelementteil mit einer Absenkung (12) in Bezug auf die Wandfläche des dynamischen Pylonelementteils, in dem der Hohlraum (11) ausgebildet ist, installiert ist, so dass die magnetische Anziehungskraft zwischen dem Permanentmagneten (7) und den Wänden des Hohlraums (11), in dem er installiert ist, größer ist als die magnetische Anziehungskraft zwischen dem Permanentmagneten (7) und seinem Gegenstück.

12. Das Gerät nach Anspruch 1 zum Umschalten der Betriebsarten des dynamischen Pylons, wobei das Gerät mindestens eine zusätzliche magnetische Sperre umfasst, die durch die Kraft der magnetischen Einheit einer zusätzlichen magnetischen Sperre ein Hindernis für die Bewegung des Riegels (2) in der Hauptaussparung (1) erzeugt, wobei die magnetische Einheit mindestens einen Permanentmagneten (7) umfasst.

13. Das Gerät nach Anspruch 1 zum Umschalten der Betriebsmodi des dynamischen Pylons, wobei die magnetische Einheit der magnetischen Sperre die Bewegung des Riegels (2) in der Hauptaussparung (1) in die gewünschte Position aus der Position, in der ein Darsteller sie platziert hat, gewährleistet, wobei eine Magnetkraft der Magneteinheit der Magnetsperre, die auf den Riegel (2) wirkt, die Summe der Magnetkräfte von Magneteinheiten anderer Magnetsperren, die auf den Riegel (2) wirken, eine Schwerkraft des Riegels (2) und Reibungskräfte zwischen dem Riegel (2) und den Wänden der Hauptaussparung (1) und der Gegenaussparung (8) übersteigt.

## Revendications

1. Un dispositif pour changer le mode de fonctionnement d'un pylône dynamique, ledit dispositif comprenant :
un loquet (2) qui crée un obstacle mécanique à la rotation d'un poteau (3) du pylône dynamique; au moins une partie d'un élément du pylône dynamique, ladite partie comprenant un évidement principal (1) pour le loquet (2), dans lequel le loquet (2) est situé en permanence et au moins partiellement, et peut se déplacer linéairement à l'intérieur de cet évidement principal (1) ;
au moins une partie d'un autre élément du pylône dynamique, ladite partie comprenant un contre-évidement (8) dans lequel le loquet (2) présente partiellement un logement temporaire pour créer
un obstacle mécanique à la rotation du poteau (3) ;
un verrou magnétique qui crée une obstruction au déplacement du loquet (2) à l'intérieur de l'évidement principal (1) en dehors de la position requise, ladite obstruction étant créée au moyen d'une force magnétique créée par une unité magnétique, ledit verrou comprenant :
premièrement, l'unité magnétique comprenant au moins un aimant permanent (7) ;
deuxièmement, au moins une partie sur laquelle l'unité magnétique est installée ;
troisièmement, au moins une partie qui est périodiquement engagée temporairement avec l'unité magnétique, dans laquelle l'évidement principal (1) communique, du côté de sa paroi latérale, avec un espace extérieur qui entoure la partie de l'élément du pylône dynamique où se trouve l'évidement principal (1).

2. Le dispositif selon la revendication 1 pour changer les modes de fonctionnement du pylône dynamique dans lequel l'évidement principal (1) est en communication avec l'espace extérieur par une fente (10) construite dans une paroi latérale d'au moins une partie de l'élément du pylône dynamique où ladite partie sépare l'évidement principal (1) de l'espace extérieur, qui entoure la partie de l'élément du pylône dynamique dans laquelle l'évidement principal (1) est situé.

3. Le dispositif selon la revendication 2 pour changer les modes de fonctionnement du pylône dynamique, dans lequel la fente (10) permet d'accéder au loquet (2).

4. Le dispositif selon la revendication 2 pour changer les modes de fonctionnement du pylône dynamique dans lequel le loquet (2) s'étend partiellement à partir de l'évidement principal (1) à travers la fente (10) au-delà des dimensions globales d'au moins une partie de l'élément du pylône dynamique où l'évidement principal (1) est prévu.

5. Le dispositif selon la revendication 1 pour changer les modes de fonctionnement du pylône dynamique, dans lequel l'évidement principal (1) est une rainure située sur la paroi latérale d'au moins une partie d'un élément du pylône.

6. Le dispositif selon la revendication 5 pour changer les modes de fonctionnement du pylône dynamique dans lequel le loquet (2) s'étend partiellement au-delà des dimensions globales d'au moins une partie du pylône où la rainure est située.

7. Le dispositif selon la revendication 1 pour changer les modes de fonctionnement du pylône dynamique dans lequel le loquet (2) est le deuxième élément du verrou magnétique et au moins une partie de l'élément du pylône dynamique où l'évidement principal (1) est situé, ladite partie étant le troisième élément du verrou magnétique.

8. Le dispositif selon la revendication 1 pour changer les modes de fonctionnement du pylône dynamique dans lequel le loquet (2) est le deuxième élément du verrou magnétique et au moins un aimant permanent (7) est installé sur au moins une partie de l'élément du pylône dynamique où l'évidement principal (1) est situé, ladite partie étant le troisième élément du verrou magnétique.

9. Le dispositif selon la revendication 1 pour changer les modes de fonctionnement du pylône dynamique dans lequel le loquet (2) est le troisième élément du verrou magnétique, et au moins une partie de l'élément du pylône dynamique dans laquelle le contre-évidement (8) est situé dans le deuxième élément du verrou magnétique.

10. Le dispositif selon la revendication 1 pour changer les modes de fonctionnement du pylône dynamique dans lequel l'aimant permanent (7) est installé dans une cavité (11) aménagée pour l'aimant permanent (7) dans la partie de l'élément du pylône dynamique avec un enfoncement (12) par rapport à la surface de paroi de la partie de l'élément du pylône, où la cavité (11) est aménagée.

11. Le dispositif selon la revendication 10 pour changer les modes de fonctionnement du pylône dynamique dans lequel l'aimant permanent (7) est installé dans la cavité (11) de la partie de l'élément du pylône dynamique avec l'enfoncement (12) par rapport à la surface de paroi de la partie de l'élément du pylône dynamique où ladite cavité (11) est réalisée de telle sorte que la force d'attraction magnétique entre l'aimant permanent (7) et les parois de la cavité (11) où il est installé est plus grande que la force d'attraction magnétique entre l'aimant permanent (7) et sa partie d'accouplement.

12. Le dispositif selon la revendication 1 pour changer les modes de fonctionnement du pylône dynamique, dans lequel le dispositif comprend au moins un verrou magnétique supplémentaire qui crée un obstacle au déplacement du loquet (2) dans l'évidement principal (1) par la force de l'unité magnétique d'un verrou magnétique supplémentaire, ladite unité magnétique comprenant au moins un aimant permanent (7).

13. Le dispositif selon la revendication 1 pour changer les modes de fonctionnement du pylône dynamique dans lequel l'unité magnétique du verrou magnétique assure le déplacement du loquet (2) dans l'évidement principal (1) dans la position requise à partir de la position où une personne l'a placé, la force magnétique de l'unité magnétique du verrou magnétique agissant sur le loquet (2) dépasse la somme des forces magnétiques des unités magnétiques des autres verrous magnétiques agissant sur le loquet (2), de la force de gravité du loquet (2) et des forces de frottement entre le loquet (2) et les parois de l'évidement principal (1) et du contre-évidement (8).
